# EUROPEAN PATENT APPLICATION

(11) **EP 4 439 509 A1**
(43) Date of publication of application: **02.10.2024**
(21) Application number: 24163416.1
(22) Date of filing: 14.03.2024
(51) Int. Cl.: G08B 13/196, G06V 20/52, G06V 20/56, G08B 21/02

(54) **INFORMATION PROCESSING APPARATUS AND INFORMATION PROCESSING METHOD**

(30) Priority: 27.03.2023 EP 23164391
(71) Applicant: Sony Group Corporation, Tokyo 108-0075 (JP)
(72) Inventor: MISEIKIS, Justinas, 70327 Stuttgart (DE); LOGHIN, Nabil, 70327 Stuttgart (DE); STAMCAR, Damjan, 70327 Stuttgart (DE); KAMRAN, Faisal, 70327 Stuttgart (DE)
(74) Representative: MFG Patentanwälte Meyer-Wildhagen Meggle-Freund Gerhard PartG mbB

(57) **Abstract**

The present disclosure provides an information processing apparatus for a parked vehicle, wherein the apparatus contains circuitry which is configured to obtain first sensor data from a first sensor of the parked vehicle for detecting a subject within the environment of the vehicle. The circuitry is further configured to determine the presence of the subject, based on the obtained first sensor data, and in the case that presence of a subject is determined, second sensor data for capturing data of the subject is obtained.

## Description

### TECHNICAL FIELD

The present disclosure generally pertains to an information processing apparatus and an information processing method for a parked vehicle.

### TECHNICAL BACKGROUND

Generally, it is known that current vehicle systems have sensors which are able to detect events in the circumference of the car. Such sensors include, for example, a camera or a LIDAR (light detection and ranging) with which a person can be detected.

Although such vehicle systems are known, it is generally desirable to provide an information processing apparatus and an information processing method for a parked vehicle.

### SUMMARY

According to first aspect, the present disclosure provides an information processing apparatus for a parked vehicle system, the apparatus comprising circuitry configured to obtain first sensor data from a first sensor of the parked vehicle for detecting a subject within the environment of the vehicle, determine the presence of the subject, based on the obtained first sensor data, and in the case that presence of a subject is determined, obtain second sensor data for capturing data of the subj ect.

According to another aspect, the present disclosure provides an information processing method for controlling a parked vehicle, the method comprising obtaining first sensor data from a first sensor of the parked vehicle for detecting a subject within the environment of the vehicle, determining the presence of the subject, based on the obtained first sensor data, and in the case that presence of a subject is determined, obtain second sensor data for capturing data of the subject.

Further aspects are set forth in the dependent claims, the following description, and the drawings.

### BRIEF DESCRIPTION OF THE DRAWINGS

Embodiments are explained by way of example with respect to the accompanying drawings, in which:
Fig. 1 shows a block diagram of an embodiment of the information processing apparatus comprising a circuitry according to the present disclosure;
Fig. 2 depicts a block diagram of an embodiment of the information processing method;
Fig. 3 shows an embodiment of a vehicle in which the information processing apparatus is included;
Fig. 4 shows a block diagram of a schematic configuration of a vehicle control system; and
Fig. 5 depicts a block diagram of another embodiment of a control system of an autonomous vehicle.

### DETAILED DESCRIPTION OF EMBODIMENTS

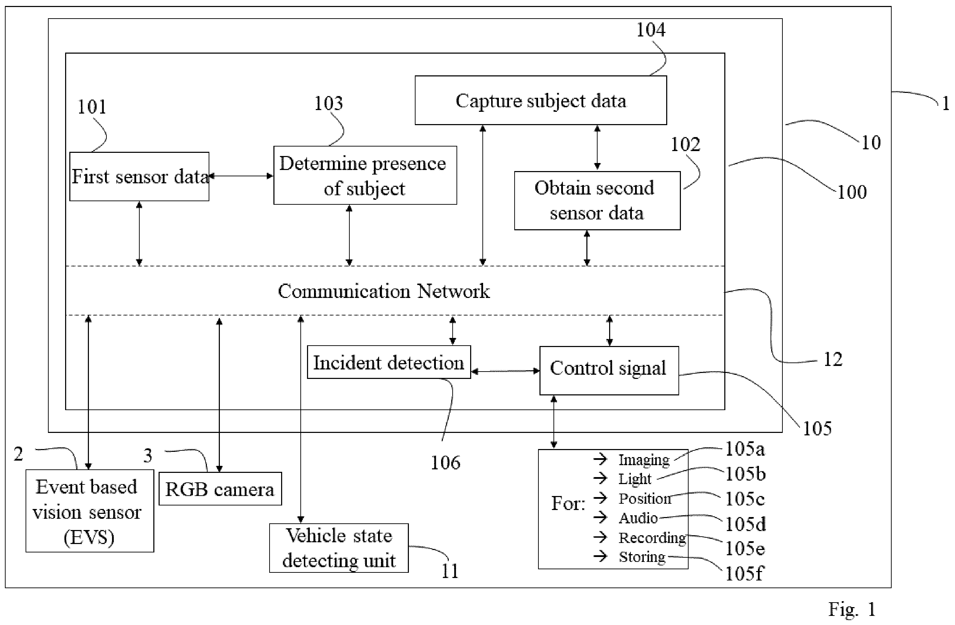

Before a detailed description of the embodiments under reference of Fig. 1 is given, general explanations are made.

As also indicated in the outset, generally, it is known that vehicles or vehicle systems have multiple signal or data receiving and signal outputting elements, and it has been recognized that they can be used for enhancing pedestrian safety when the vehicle is idle and also when it is, e.g., unoccupied. Furthermore, low energy consumption sensors such as motion detection or event-based sensors may reduce energy consumption in the battery of the vehicle when monitoring its surroundings in idle position.

In recent years, in order to arrive at fully autonomous driving, it is known that vehicles such as cars are supplied with imaging sensors, movement sensors and light devices or audio signaling devices or the like. The imaging sensors in such vehicles are, for example, motion or event-based sensors, such as an EVS (event-based vision sensor) camera, but also thermal imaging cameras and RGB sensors, in order to monitor the surroundings of the vehicle at all times.

Moreover, electronic parts of a vehicle like low energy and small lighting elements, e.g. LEDs, can allow to install more than head and rear lights onto a vehicle, such as light elements on the longitudinal side of the vehicle. Also, modern vehicles are able to move the cone of light of, for example, rear or headlights towards a longitudinal direction of the vehicle.

It has been recognized that the above-mentioned electronic parts of a vehicle can also be used to enhance pedestrian safety when the vehicle is idle without the need of a person controlling the vehicle. Hence, in some embodiments, the vehicle may thereby serve as event-based recording medium, illumination device, alarming device and the like.

Thus, the present disclosure provides an information processing apparatus for a parked vehicle, the apparatus including circuitry configured to obtain first sensor data from a first sensor of the parked vehicle for detecting a subject within the environment of the vehicle, determine presence of the subject, based on the obtained first sensor data, and in the case that presence of a subject is determined, obtain second sensor data for capturing data of the subject.

The information processing apparatus may be included as a whole or in part in the parked vehicle and may be based on or may include or may be implemented by known electronic components configured to achieve the functionality as described herein. The information processing apparatus and its circuitry may be based on or may include or may be implemented as integrated circuitry logic and the functionality may be implemented by software executed by a processor or the like. The information processing circuitry may be based on or may include or may be implemented by a CPU (central processing unit), a microcontroller, an FPGA (field programmable gate array), an ASIC (application specific integrated circuit) or the like.

The vehicle may be a car, a bike (e.g. electrically driven or by a combustion engine), or any other moveable and driven vehicle typically participating in traffic. In some embodiments, the vehicle may be a ship or an aircraft or the like.

The vehicle may be considered as parked, for example, in the case that the ignition is off, no occupant is in the vehicle, no driver is in the vehicle, the electric circuit which is used for driving the vehicle is switched off or the like. The information processing apparatus may detect that the vehicle is parked, for example, based on the examples given above or in response to receiving a signal indicating that the vehicle is parked, wherein this signal may be provided from a corresponding device in the vehicle, which is configured to detect the associated state of the vehicle.

The first sensor data may be obtained from the first sensor, e.g. by requesting the first sensor to provide the first sensor data or the first sensor is configured to provide that data, e.g. upon detecting an incident or based on a predefined pattern, e.g. a timing pattern. The first sensor data may be obtained via a communication link to the first sensor, wherein the communication link can be wirelessly or by wire (e.g. via a communication bus included in the vehicle, such as a vehicle bus system (e.g. CAN-bus, LIN-bus or the like).

The first sensor may be included in the parked vehicle, e.g. it may be part of the equipment of the vehicle or it may be added to the vehicle (mounted to the vehicle, connected to the vehicle, etc.).

The subject may be for example one or more persons, an animal or the like.

The determination of the presence of a subject may include the determination, whether a subject in the environment of the vehicle is present or not. This may be based on a determination that the first sensor data indicate a change within the environment of the vehicle. Such a change includes, for example, a change in reflectivity, luminescence, brightness, temperature or any other change of a physical parameter which can be detected by the first sensor and which is, in principle, able to represent a presence of the subject within the environment in the first sensor data.

The environment of the vehicle may be defined by the sensing range of the first or second sensor or by both the first and second sensor.

The second sensor data may be obtained from the first sensor as described above or it may be obtained from a second sensor. The second sensor data may be obtained via the same manner as the first sensor data or via a different manner, e.g. by requesting the first or second sensor to provide the second sensor data or the first or second sensor is configured to provide that second sensor data, e.g. upon detecting an incident or based on a predefined pattern, e.g. a timing pattern (wherein, as discussed for the first sensor data, the second sensor data may be obtained via a communication link to the first or to the second sensor, wherein the communication link can be wirelessly or by wire (e.g. via a communication bus included in the vehicle, such as a vehicle bus system (e.g. CAN-bus, LIN-bus or the like)).

In some embodiments, the first sensor and the second sensor are based on the same technology, e.g. imaging sensors, LIDAR sensors, thermal sensors, ultrasonic, infrared, microphone, or the like.

The first sensor and the second sensor may differ in at least one sensor parameter, such as resolution, field of view, power consumption, number sensor elements, size or dimensions of sensitive area, or the like.

In some embodiments, wherein the first sensor differs from the second sensor, the first sensor may be configured to provide first sensor data on a first level of granularity, first level of resolution or the like, while the second sensor may be configured to provide second sensor data on a second level of granularity, second level of resolution or the like, wherein, in some embodiments, the second level is finer than the first level, such that the second sensor data allow an enhance analysis of the environment compared to the first sensor data. In some embodiments, the first sensor has a lower power consumption than the second sensor, such that the overall power consumption can be reduced compared to embodiments where the first sensor has a power consumption comparable with the second sensor. In some embodiments, the first sensor is based on a first technology which differs from the second technology of the second sensor, wherein the first technology provides first sensor data allowing a first level of analysis for determining the presence of the subject, while the second technology provides second sensor data, which allows a second level of analysis for determining, for example, a behavior of the subject, a movement path of the subject, whether the subject approaches the parked vehicle, etc., or for determining an incident in association with the subject, e.g. that the subject either attacks the parked vehicle or any other object or subject within the environment of the parked vehicle. In some embodiments, the first technology of the first sensor may be based on at least one of: event-based vision sensor, infrared sensor, thermal sensor, time-of-flight sensor, ultrasonic sensor, LIDAR sensor, or the like, or providing sensor data with which it is possible to discriminate a subject from its surroundings (e.g. background information) within the environment, thereby allowing the determination of the presence of the subject within the environment. In such embodiments, the second technology of the second sensor may be based on an imaging sensor which allows determination of further details as discussed herein.

The second sensor may be included in the vehicle, e.g. it may be part of the equipment of the vehicle or it may be added to the vehicle (mounted to the vehicle, connected to the vehicle, etc.).

In some embodiments, the circuitry is further configured to define a region of interest (ROI) including the determined subject and wherein the second sensor data are obtained based on the defined ROI.

A region of interest may be defined as a region in which the subject is determined to be present, for example, based on the first sensor data (in some embodiments also the second sensor data are used for defining the ROI). The ROI is a specific region within an image or a video sequence that contains relevant information about the subject, which may be for example the current position of the subject, but also movement of the subject or the like. The ROI may then be used to obtain second sensor data based on the defined region of interest.

In some embodiments, the circuitry is further configured to generate a light control signal for controlling a light device of the parked vehicle for illuminating the region of interest.

A light control signal may cause turning on or off the light device, e.g. front light, a headlight, rear lights or lights on the longitudinal side of the vehicle, or any other light or projection device of the parked vehicle. By illuminating the ROI, the subject and its environment may be illuminated thereby enhancing the quality of the second senor data with respect to, for example, contrast and visibility of the subject and its behavior and, e.g., other objects and subjects within the ROI.

In some embodiments, the circuitry is further configured to define a field of view (FoV) for the determined ROI. A FoV may be the extent of the observable or sensitive area being able to be captured by a sensor, e.g. an imaging sensor or the like. The FoV may include a fixed viewing angle through which the sensor captures the data.

In some embodiments, the circuitry is further configured to adjust a field of view (FoV) for the determined ROI, thereby, for example, improving the first or second sensor data with respect to quality of visibility of the subject, or the like.

In some embodiments, wherein the adjustment of the field of view includes at least one of: adjusting a position of the first sensor, adjusting a lens of the first sensor, and adjusting a mirror of the parked vehicle or the like. The adjustment may be performed by generating a control signal for changing the position of moveable elements of the vehicle such as side or rear mirrors, but also of top, front or rear-view cameras, or a camera lens, or the like. In some embodiments, the adjustment of the FoV allows to follow the determined subject and its behavior.

In some embodiments, the second sensor data are obtained using a second sensor of the vehicle, as already explained above.

In some embodiments, as also indicated above, the first sensor includes an event-based vision sensor and the second sensor includes an image sensor. An event-based vision sensor may be an EVS camera that responds, for example, to local changes in brightness. An EVS camera may not have a fixed frame rate of recording, but only records or outputs the first sensor data when a local change is monitored, thereby triggering the imaging of the first sensor. An image sensor may be for example an RGB camera. The EVS camera may have a lower power consumption than the RGB camera, such that in such embodiments can be saved. The first sensor data output by the EVS camera may include brightness or event information, which allows to determine the presence of the subject, while the second sensor data output by the RGB camera may allow to determine individuals and their behavior.

In some embodiments, the circuitry is further configured to determine an incident associated with the determined subject based on at least one of the first and second sensor data. A detected incident can be, but is not limited to, for example a person walking towards the parked vehicle, a person cycling towards the vehicle, a person falling in the vicinity of the vehicle, a person or an animal damaging the vehicle, another person walking towards a first person, another person harming a first person, and the like. Thus, in some embodiments, the incident may be associated with a potential crime, damage of the parked vehicle or any other unwanted action performed (or caused) by the subject or performed to the subject.

In some embodiments, the circuitry is further configured to generate a control signal based on the determined incident. A control signal may control an event or action performed by the vehicle based on, for example, the subject and incident detection. Such a control signal may, for example, but is not limited to, cause switching on lights (on the rear, head and/or longitudinal side) of the vehicle, moving the light cone of a light of a vehicle (e.g. also following a movement path of the subject), switching on an imaging sensor, moving the imaging sensor towards a direction that was determined by the circuitry (e.g. adjusting FoV of the ROI), recording the captured imaging data, storing the recorded imaging data, triggering an alarm of the vehicle, trigger an audio signal of the vehicle, calling an ambulance to the vehicle, and the like. A control signal may also be a signal that hinders the vehicle from performing a certain action, e.g. for example starting the vehicle or the like.

In some embodiments, the determined incident may include to determine different types of incidents, wherein the different types may be associated with different types of actions to be cause by the control signal. For instance, the different types of incidents may indicate different levels of danger and the different types of actions address the different types of danger. For instance, a first type may be a low level of danger (e.g. darkness, person approaching, etc.), a second type may be a medium level of danger (e.g. subject close to parked vehicle, multiple subjects detected, objects in hand of person detected, etc.) and a third type may be a high level of danger (e.g. parked vehicle is damaged, person is harmed, object is damaged, etc.). For the first type (low level of danger), the action may include, for example, turning on the lights, adjusting ROI and FoV, etc. For the second type (medium level of danger), the action may include recoding at least one of the first and second sensor data, switching on of further sensors and recording data, sending a visible or audio signal to the subject (e.g. by operating a horn, by turning on and off the light device in accordance with a predetermined timing pattern (the timing pattern may be dependent on the distance between the parked vehicle and the determined subject)), etc. For the third type (high level of danger), the action may include storing of recorded data, in order to allow the identification of a perpetrator, e.g. by providing the stored data to the police or any other official authority, initiating an alarm (visible, audio), contacting police, first responders, etc.

Generally, the recording and storing of data, such as first and second senor data, imaging data, audio data, etc., may be in accordance with Data Protection Law (e.g. General Data Protection Regulation or the like).

In some embodiments, an event or action is triggered based on the subject determination and the determination of an associated incident. A triggered event may include, as also mentioned above, for example, recording of the subject using the second sensor data, such as data from the RGB camera that was triggered by the first sensor data. First sensor data may also be recorded.

Further events that may be triggered in the vehicle are for example that, when the incident in connection with a subject is identified to be a person damaging the vehicle, the data from the first and/or second sensor may be stored for 24 hours (or any other specified period of time, wherein the period of time may be defined based on, for example, data protection rules, storage capacity, at least until the data are read out, or the like).

Another example of a triggered event is that, when the incident in connection with a subject is identified to be a person experiencing physical harm, the data from the first and/or second sensor may be stored for 24 hours (or any other specified period of time).

Also, when the incident indicates physical harm of a person, first responders may be called using the global positioning system (GPS) of the parked vehicle.

A triggered event in connection with a subject may also be a person walking in the vicinity of the parked vehicle and the event triggered in the parked vehicle may be to illuminate the walking path of the person using lights of the parked vehicle. A degree of illumination may be based on ambient light intensity obtained from the first sensor data. A predicted path of the person may be illuminated by the lights of the parked vehicle.

The present disclosure further provides an information processing method for controlling a parked vehicle including: obtaining first sensor data from a first sensor of a vehicle for detecting a subject within the environment of the vehicle, determining the presence of a subject based on the obtained first sensor data, and in the case that the presence of a subject is determined, obtaining second sensor data for capturing data of the subject, as discussed above. The information processing method may further include defining a ROI that includes the determined subject and wherein the second sensor data are obtained based on the defined region of interest, as discussed above. The information processing method may further include generating a light control signal for controlling a light device of the parked vehicle in order to illuminate the ROI, as discussed above. The information processing method may further include defining a FoV for the ROI, as discussed above. The information processing method may further include adjusting the FoV to the ROI, as discussed above. The method may further include at least one of adjusting a position of the first sensor, adjusting a lens of the first sensor, and adjusting a mirror of the parked vehicle, as discussed above. The information processing method may further include the use of second sensor data from a second sensor of a vehicle, as discussed above. The information processing method may further include an event-based vision sensor as a first sensor and an image sensor as a second sensor, as discussed above. The information processing method may further include determining an incident associated with the determined subject based on at least one of the first and second sensor data, as discussed above. The information processing method may further include generating a control signal based on the determined incident, as discussed above.

The information processing method may be based on or may be implemented or may be carried out by electronic components, integrated circuitry logic, CPU, FPGA, software or in parts by electronic components and in parts by software executed by a processor, the information processing circuitry of the present disclosure, or the like.

The methods as described herein are also implemented in some embodiments as a computer program causing a computer and/or a processor to perform the method, when being carried out on the computer and/or processor. In some embodiments, also a non-transitory computer-readable recording medium is provided that stores therein a computer program product, which, when executed by a processor, such as the processor described above, causes the methods described herein to be performed.

Returning to Fig. 1, an embodiment of a vehicle safety device 10 (information processing apparatus) is illustrated as a block diagram, which is implemented in a vehicle 1.

The vehicle safety device 10 includes a circuitry 100, which is configured to perform the safety concept discussed above.

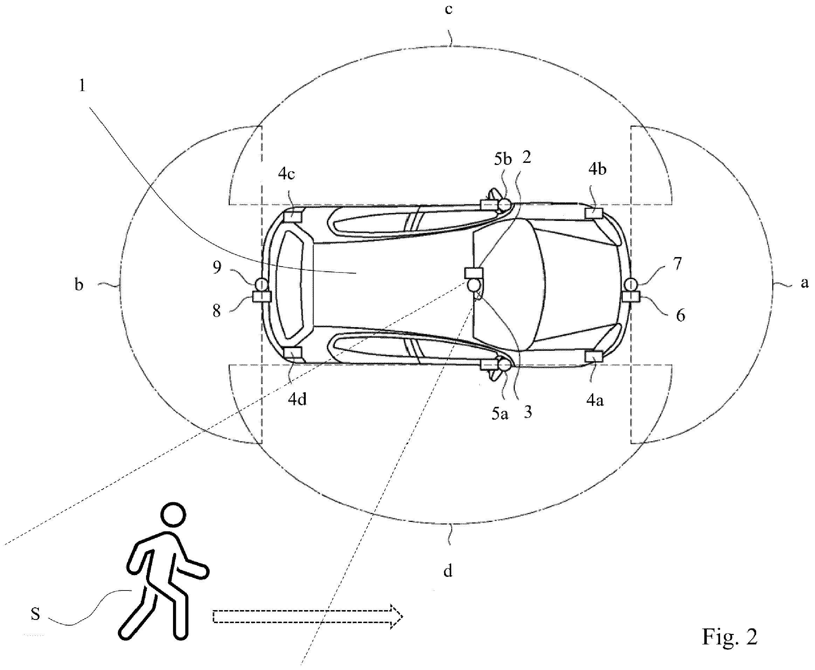

In the present embodiment, the vehicle 1 includes a vehicle state detecting unit 11 and a communication network 12, which is configured as CAN bus in the present embodiment. As can also be taken from Fig. 2, illustrating the vehicle 1 and an approaching subject S in a bird-eye's view, the vehicle 1 has a variety of sensors 2, 3, 6, 7, 8, and 9, coupled to communication network 12, wherein exemplarily, the first sensor 2 is an EVS camera and the second sensor 3 is an RGB camera, wherein the sensor 6 is a front-view camera, the sensor 8 is a rear-view camera, the sensor 7 is a front-side ultrasonic sensor and the sensor 9 is a rear-side ultrasonic sensor.

The EVS camera 2 is mounted on top of the vehicle 1, and the RGB camera 3 is also mounted on top of the vehicle. Both sensors 2, 3 are able to capture a subject S in the Field of View of the sensors (dashed lines) and are able to adjust the Field of View in, for example, a walking direction of the subject S (dashed arrow). In that way data of a subject can be captured in every direction of the vehicle, both longitudinal sides "c" and "d" as well as the front side "a" and the back side "b".

The vehicle 1 has a light device with four light elements 4a, 4b, 4c, and 4d, wherein the light element 4a is positioned on the front-left side, the light element 4b is positioned on the front-right side, the light element 4c is positioned on the rear-left side and the light element 4d is positioned on the rear-right side. The light elements 4a-d are configured to adjust an emitted light cone.

The vehicle safety device 10 communicates with the vehicle state detecting unit 11 and electric components of the vehicle 1, such as components 2 to 9, via the communication network 12.

The vehicle state detection unit 11 is configured to detect, whether the vehicle 1 is in a parked state, e.g. by determining that the ignition is turned off, the drives do not rotate, the motor is off, etc., and it sends a corresponding "vehicle parked signal" to the vehicle safety device 10 via the communication network 12, such that the vehicle safety device 10 switches to an active state.

In some embodiments, the vehicle safety device 10 or the vehicle state detection unit 11 determines, for example, whether the vehicle 1 is in a protected environment, such as a garage, where the vehicle safety device 10 is not needed, and, thus, not activated, or whether the vehicle 1 is, for example, in the open environment, where it is useful to switch the vehicle safety device 10 in an active state.

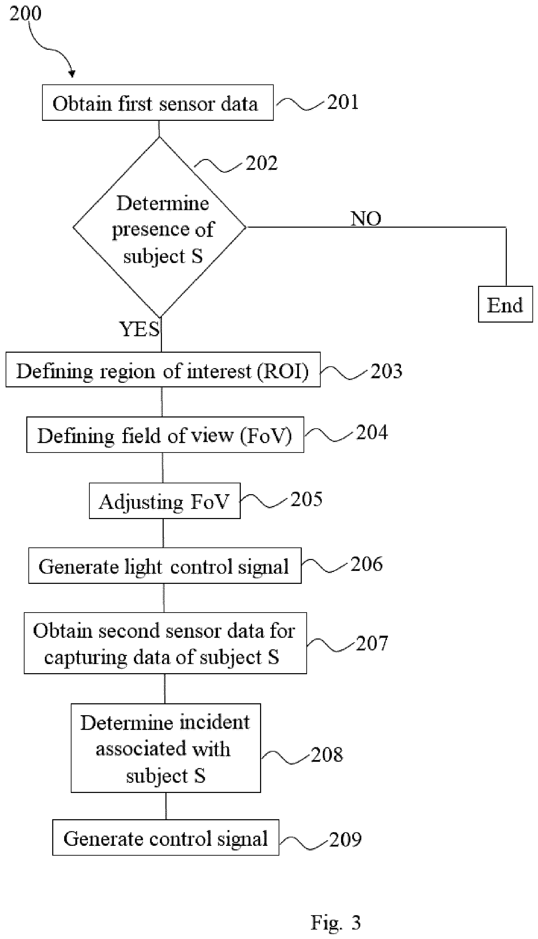

The circuitry 100 is configured to perform the method 200, illustrated in Fig. 3 which is explained in more detail further below together with the functions of the circuitry 100.

Here, the circuitry 100 is illustrated with several functions 101 to 106, performing the method 200, as will also be explained in more detail further below. The functions 101 to 106 may be implanted in at least one of software and hardware.

The first sensor data function 101 is configured to obtain, at 201 (Fig. 3), first sensor data from the EVS camera 2 (first sensor) via the communication network 12, to process them and to send them to the function 102 "determine presence of subject S" (Fig. 1).

The function 102 determines the presence of the subject S based on the first sensor data, i.e. EVS data, by determining whether, e.g., a person-like shape is detected in the EVS data representing the environment of the vehicle 1. The person-like shape can be detected when the person is moving, since, the movement is detected by the EVS sensor, which outputs according EVS data as first sensor data.

In the case that the function 102 determines the presence of the subject S ("YES" at 202 in Fig. 3), it sends the information to the function 103 for capturing subject data. Otherwise the procedure ends ("NO" in Fig. 3). In some embodiments, the circuitry is configured to only capture data of the subject if the subject is present, by avoiding mis-detections, e.g. items or debris moved by, for example the wind, in the environment of the vehicle, movement of a plant such as a bush or a branch of a tree in the vicinity of the vehicle, and the like.

The function 103 for capturing the subject data controls the second sensor data function 104 to obtain second sensor data from the RGB camera 3.

The function 103 is configured to define, at 203 (Fig. 3), a Region of Interest ("ROI") including the determined subject S passing by the vehicle 1, as also illustrated in Fig. 2.

The function 103 may detect that the environment is dark, e.g. since it is night, based on the first sensor data (or on time data, weather data, light sensor data of vehicle 1 or the like), and in response to that it can invoke the control signal function 105 to send a control signal 105b to switch on the light device (at 206 in Fig. 3), e.g. light elements 4d and 4a at which the subject S passes by.

Moreover, the function 103 is configured to define a Field of View ("FoV"), at 204 (Fig. 3), of the ROI and to adjust, at 205 (Fig. 3), the FoV to the ROI. As also discussed above, the adjustment includes controlling at least one of: adjusting a position of the first sensor, adjusting a lens of the first sensor, and adjusting a mirror of the parked vehicle. In the present embodiment, the function 103 controls via the control signal function 105 via control signals 105c the FoV of the moveable and adjustable RGB camera 3 to focus the FoV to the ROI. Additionally, the control signal function 105c may control the position of mirrors 5a and 5b of the vehicle 1 (Fig. 2), in embodiments where the mirror 5a or 5b is within the FoV of the RGB camera, such that, for example, the ROI can be found by adjusting the associated mirror 5a or 5b accordingly, since the RGB camera captures the mirror 5a or 5b, which in turn reflects the ROI.

When, the above discussed adjustments are performed, the second sensor data function 104 obtains, at 207 (Fig. 3), the second sensor data from the RGB camera 3 and sends the second sensor data to the incident detection function 106.

The incident detection function 106 is configured to determine an incident associated with the subject S, based on the second sensor data, i.e. the RGB image data, and it may also use the first sensor data.

The incident detection function 106 performs a subject and object detection based on the RGB image data (and in some instances additionally based on the EVS data), thereby detecting the subject and whether, for example, the subject interacts with an object (stone, stick, or the like).

Moreover, the incident detection function 106 is configured to analyze the behavior of the detected subject, such as that a person is walking towards the vehicle, interacts with another subject or object, throws an object, or any other behavior which may result in a damage of the vehicle 1 or of any other subject or object within the environment of the vehicle 1. Here, the environment is defined by the sensing range of the sensors of the vehicle 1, in particular, the EVS camera 2 and the RGB camera 3.

The incident function 106 may use further data from other sensors of the vehicle 1, such as from the cameras 6 and 8 and the ultrasonic sensors 7 and 9 to further analyze the incident, such as the behavior of the subject. For instance, the ultrasonic sensors 7 and 9 are able to detect the moving subject or object within the vicinity of the vehicle 1 and the cameras 6 and 8 are able to image the subject or object accordingly.

Based on the determined incident, the control signal function 105 generates, at 209 (Fig. 3), a control signal, such as an imaging 105a, a light 105b, a position 105c, an audio 105d and a recording 105e control signal.

As also discussed above, the action caused by the control signal may be based on the level of danger which is associated with the determined incident.

As discussed above, a first type of incident may be a low level of danger (e.g. darkness, person approaching, etc.), a second type may be a medium level of danger (e.g. subject close to parked vehicle, multiple subjects detected, objects in hand of person detected, etc.) and a third type may be a high level of danger (e.g. parked vehicle is damaged, person is harmed, object is damaged, etc.).

For the first type (low level of danger), the control signal function 105 generates the light signal 105b which turns on the light device including light elements 4a-d and it adjusts the ROI and FoV, as discussed.

For the second type (medium level of danger), the control signal function 105 generates the recoding 105e signal for recording at least one of the first and second sensor data, switching on of further sensors, such as ultrasonic sensors 7 and 9, the cameras 6 and 8 and a microphone by sending audio signal 105d (not depicted).

For the third type (high level of danger), the control signal function 105 generates a storing signal 105f for storing the recorded data, in order to allow the identification of a perpetrator, e.g. by providing the stored data to the police or any other official authority. Additionally, an alarm (visible, audio) may be initiated, the police contacted, first responders contacted, etc.

The method 200 illustrated in Fig. 3 may be implemented in the vehicle safety device 10 of Figs. 1 and 2, as discussed above, but it can also be implemented in some embodiments as a computer program causing a computer and/or a processor to perform the method, when being carried out on the computer and/or processor. In some embodiments, also a non-transitory computer-readable recording medium is provided that stores therein a computer program product, which, when executed by a processor, such as the processor described above, causes the methods described herein to be performed. The ordering of the steps of method 200 is made for illustrative purposes only, and, for example, steps 203 bis 207 may ordered differently, such that, e.g., the step 207 may be performed after step 202 and before any one of or in between steps 203 to 206. Also step 206 may be performed before or in between any one of steps 203 to 205.

The technology according to an embodiment of the present disclosure is applicable to various products. For example, the technology according to an embodiment of the present disclosure may be implemented as a device included in a mobile body that is any of kinds of automobiles, electric vehicles, hybrid electric vehicles, motorcycles, bicycles, personal mobility vehicles, airplanes, drones, ships, robots, construction machinery, agricultural machinery (tractors), and the like.

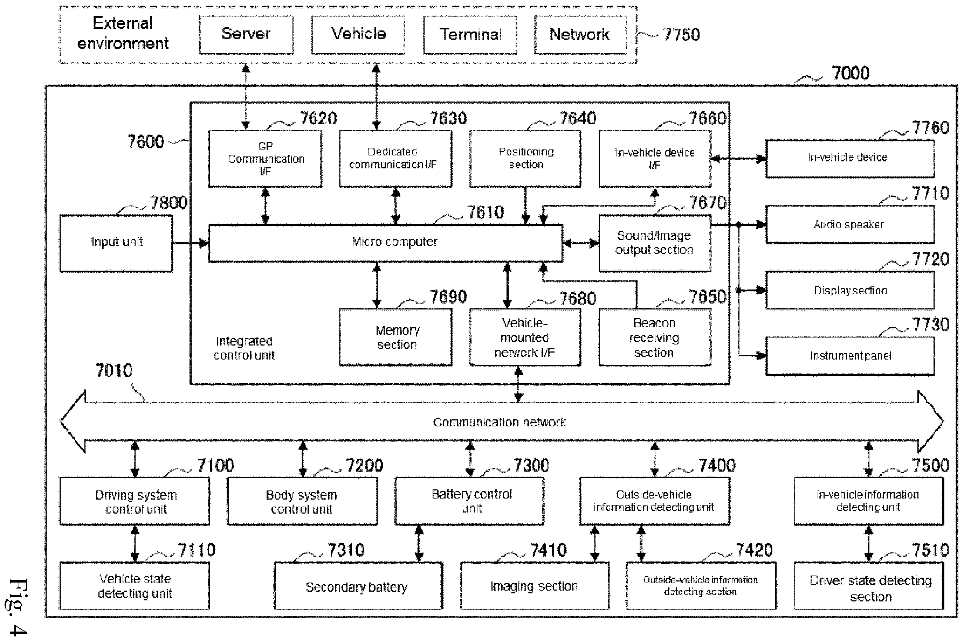

Fig. 4 is a block diagram depicting an example of schematic configuration of a vehicle control system 7000 as an example of a mobile body control system to which the technology according to an embodiment of the present disclosure can be applied and which is configured to implement the method 200 of Fig. 3. The vehicle control system 7000 includes a plurality of electronic control units connected to each other via a communication network 7010. In the example depicted in Fig. 4, the vehicle control system 7000 includes a battery control unit 7300, an outside-vehicle information detecting unit 7400 and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in Fig. 4 includes a microcomputer 7610 of which the circuitry 100 may be part of, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera and other cameras. The outside-vehicle information detecting section 7420, for example, includes at least one of an environmental sensor for detecting current atmospheric conditions or weather conditions and a peripheral information detecting sensor, an event based camera, or the like for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

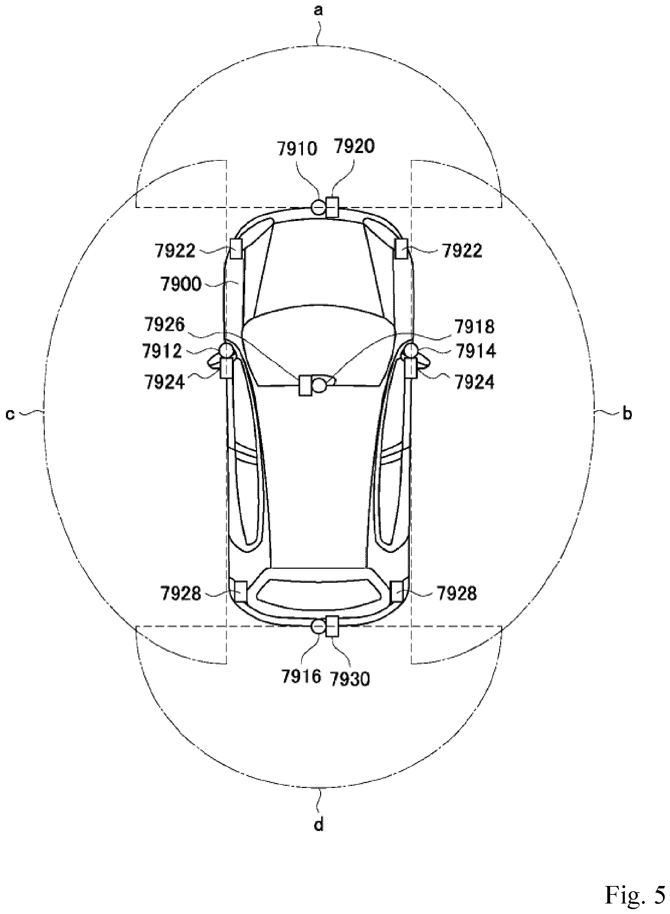

Fig. 5 depicts an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900.

The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, Fig. 5 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device or an event-based sensor. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to Fig. 4, the description will be continued. The outside-vehicle information detecting unit 7400 makes the imaging section 7410 image an image of the outside of the vehicle, and receives imaged image data. In addition, the outside vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

The outside vehicle information detection unit may also use second sensor data in order to identify in incident in association with the determined subject. The second sensor data may be from a similar sensor than the first sensor or a different sensor (i.e. second sensor) of the outside vehicle detection unit 7400.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), Low Power Wide Area Network (LPWAN), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automatic driving, which makes the vehicle to travel autonomously without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict events such as, approaching of a pedestrian or the like on the basis of the obtained information, and generate a warning signal. The warning signal may, for example, be a signal for producing a warning sound or lighting a warning lamp outside of the vehicle.

The sound/image output section 7670 transmits an output signal of at least one of a sound and an image to an output device capable of visually or auditorily notifying information to the outside of the vehicle. In the example of Fig. 4, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in Fig. 4 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Incidentally, a computer program for realizing the functions of the information processing apparatus 100 according to the present embodiment described with reference to Fig. 4 can be implemented in one of the control units or the like. In addition, a computer readable recording medium storing such a computer program can also be provided. The recording medium is, for example, a magnetic disk, an optical disk, a magneto-optical disk, a flash memory, or the like. In addition, the above-described computer program may be distributed via a network, for example, without the recording medium being used.

It should also be noted that the division of the control or circuitry 7600 of Fig. 4 into units 7610 to 7690 is only made for illustration purposes and that the present disclosure is not limited to any specific division of functions in specific units. For instance, at least parts of the circuitry could be implemented by a respective programmed processor, field programmable gate array (FPGA), dedicated circuits, and the like.

All units and entities described in this specification and claimed in the appended claims can, if not stated otherwise, be implemented as integrated circuit logic, for example on a chip, and functionality provided by such units and entities can, if not stated otherwise, be implemented by software.

In so far as the embodiments of the disclosure described above are implemented, at least in part, using software-controlled data processing apparatus, it will be appreciated that a computer program providing such software control and a transmission, storage or other medium by which such a computer program is provided are envisaged as aspects of the present disclosure.

Note that the present technology can also be configured as described below.
(1) An information processing apparatus for a parked vehicle, the apparatus comprising circuitry configured to:
   obtain first sensor data from a first sensor of the parked vehicle for detecting a subject within the environment of the vehicle,
   determine presence of the subject, based on the obtained first sensor data, and
   in the case that presence of a subject is determined, obtain second sensor data for capturing data of the subject.
(2) The information processing apparatus of (1), wherein the circuitry is further configured to define a region of interest including the determined subject and wherein the second sensor data are obtained based on the defined region of interest.
(3) The information processing apparatus of (2), wherein the circuitry is further configured to generate a light control signal for controlling a light device of the parked vehicle for illuminating the region of interest.
(4) The information processing apparatus of (2) or (3), wherein the circuitry is further configured to define a field of view for the region of interest.
(5) The information processing apparatus of (4), wherein the circuitry is further configured to adjust the field of view to the region of interest.
(6) The information processing apparatus of (5), wherein the adjustment of the field of view includes controlling at least one of: adjusting a position of the first sensor, adjusting a lens of the first sensor, and adjusting a mirror of the parked vehicle.
(7) The information processing apparatus of any one of (1) to (6), wherein the second sensor data are obtained from a second sensor of the parked vehicle.
(8) The information processing apparatus of (7), wherein the first sensor includes an event-based vision sensor and the second sensor includes an image sensor.
(9) The information processing apparatus of any one of (1) to (8), wherein the circuitry is further configured to determine an incident associated with the determined subject based on at least one of the first and second sensor data.
(10) The information processing apparatus of (9), wherein the circuitry is further configured to generate a control signal based on the determined incident.
(11) An information processing method for controlling a parked vehicle, the method comprising:
   obtaining first sensor data from a first sensor of the parked vehicle for detecting a subject within the environment of the vehicle,
   determining presence of the subject, based on the obtained first sensor data, and
   in the case that presence of a subject is determined, obtaining second sensor data for capturing data of the subject.
(12) The information processing method of (11), further comprising defining a region of interest including the determined subject and wherein the second sensor data are obtained based on the defined region of interest.
(13) The information processing method of (12), further comprising generating a light control signal for controlling a light device of the parked vehicle for illuminating the region of interest.
(14) The information processing method of (12) or (13), further comprising defining a field of view for the region of interest.
(15) The information processing method of (14), further comprising adjusting the field of view to the region of interest.
(16) The information processing method of (15), wherein the adjustment of the field of view includes controlling at least one of: adjusting a position of the first sensor, adjusting a lens of the first sensor, and adjusting a mirror of the parked vehicle.
(17) The information processing method of any one of (11) to (16), wherein the second sensor data are obtained from a second sensor of the parked vehicle.
(18) The information processing method of (17), wherein the first sensor includes an event-based vision sensor and the second sensor includes an image sensor.
(19) The information processing method of any one of (11) to (18), further comprising determining an incident associated with the determined subject based on at least one of the first and second sensor data.
(20) The information processing method of (19), further comprising generating a control signal based on the determined incident.
(21) A computer program comprising program code causing a computer to perform the method according to anyone of (11) to (20), when being carried out on a computer.
(22) A non-transitory computer-readable recording medium that stores therein a computer program product, which, when executed by a processor, causes the method according to anyone of (11) to (20) to be performed.

## Claims

1. An information processing apparatus for a parked vehicle, the apparatus comprising circuitry configured to:
obtain first sensor data from a first sensor of the parked vehicle for detecting a subject within the environment of the vehicle,
determine presence of the subject, based on the obtained first sensor data, and
in the case that presence of a subject is determined, obtain second sensor data for capturing data of the subject.

2. The information processing apparatus of claim 1, wherein the circuitry is further configured to define a region of interest including the determined subject and wherein the second sensor data are obtained based on the defined region of interest.

3. The information processing apparatus of claim 2, wherein the circuitry is further configured to generate a light control signal for controlling a light device of the parked vehicle for illuminating the region of interest.

4. The information processing apparatus of claim 2 or 3, wherein the circuitry is further configured to define a field of view for the region of interest.

5. The information processing apparatus of claim 4, wherein the circuitry is further configured to adjust the field of view to the region of interest.

6. The information processing apparatus of claim 5, wherein the adjustment of the field of view includes controlling at least one of: adjusting a position of the first sensor, adjusting a lens of the first sensor, and adjusting a mirror of the parked vehicle.

7. The information processing apparatus of any one of the preceding claims, wherein the second sensor data are obtained from a second sensor of the parked vehicle;
in particular wherein the first sensor includes an event-based vision sensor and the second sensor includes an image sensor.

8. The information processing apparatus of any one of the preceding claims, wherein the circuitry is further configured to determine an incident associated with the determined subject based on at least one of the first and second sensor data;
in particular wherein the circuitry is further configured to generate a control signal based on the determined incident.

9. An information processing method for controlling a parked vehicle, the method comprising:
obtaining first sensor data from a first sensor of the parked vehicle for detecting a subject within the environment of the vehicle,
determining presence of the subject, based on the obtained first sensor data, and
in the case that presence of a subject is determined, obtaining second sensor data for capturing data of the subject.

10. The information processing method of claim 9, further comprising defining a region of interest including the determined subject and wherein the second sensor data are obtained based on the defined region of interest.

11. The information processing method of claim 10, further comprising generating a light control signal for controlling a light device of the parked vehicle for illuminating the region of interest.

12. The information processing method of claim 10 or 11, further comprising defining a field of view for the region of interest.

13. The information processing method of claim 12, further comprising adjusting the field of view to the region of interest;
in particular wherein the adjustment of the field of view includes controlling at least one of: adjusting a position of the first sensor, adjusting a lens of the first sensor, and adjusting a mirror of the parked vehicle.

14. The information processing method of any one of claims 9 to 13, wherein the second sensor data are obtained from a second sensor of the parked vehicle;
in particular wherein the first sensor includes an event-based vision sensor and the second sensor includes an image sensor.

15. The information processing method of any one of claims 9 to 14, further comprising determining an incident associated with the determined subject based on at least one of the first and second sensor data;
in particular wherein the method further comprises generating a control signal based on the determined incident.
